# EUROPÄISCHE PATENTANMELDUNG

(11) **EP 1 892 147 A1**
(43) Veröffentlichungstag der Anmeldung: **27.02.2008**
(21) Anmeldenummer: 07012334.4
(22) Anmeldetag: 23.06.2007
(51) Int. Cl.: B60Q 1/26

(54) **Heckleuchte für ein Fahrzeug**

(30) Priorität: 31.07.2006 DE 102006035503
(71) Anmelder: Dr.Ing. h.c. F. Porsche Aktiengesellschaft, 70435 Stuttgart (DE)
(72) Erfinder: Hiesl, Gerald, 71083 Herrenberg-Oberjesingen (DE); Redlich, Heinz, 71665 Vaihingen-Enz (DE); Dambowy, Christoph, 75446 Wiernsheim (DE); Heimpel, Peter, 75233 Muehlhausen (DE)

(57) **Zusammenfassung**

Die Erfindung betrifft eine Heckleuchte (10) für ein Fahrzeug, mit einem Leuchtbereich (11) für ein Rückfahrlicht, mit einem Leuchtbereich (12) für ein Blinklicht, mit einem Leuchtbereich (14) für ein Schlusslicht, mit einem Leuchtbereich (15) für ein Bremslicht und mit einem Leuchtbereich (16) für ein Nebelschlusslicht, wobei zumindest die vier Leuchtbereiche (12, 14, 15, 16) für das Blinklicht und das Schlusslicht und das Bremslicht und das Nebelschlusslicht von LED gebildet sind, wobei sich die drei Leuchtbereiche (14, 15, 16) für das Schlusslicht und das Bremslicht und das Nebelschlusslicht zumindest derart teilweise überlappen, dass einige LED in mehreren dieser drei Leuchtbereiche (14, 15, 16) angeordnet sind, und wobei die LED dieser drei Leuchtbereiche (14, 15, 16) derart ansteuerbar sind, dass dieselben abhängig von einer Fahrsituation einem der Leuchtbereiche zugeordnet sind.

## Beschreibung

Die Erfindung betrifft eine Heckleuchte für ein Fahrzeug nach dem Oberbegriff des Anspruchs 1.

Aus der DE 198 52 999 A1 ist eine Heckleuchte für ein Fahrzeug bekannt, die einen Leuchtbereich für ein Rückfahrlicht, einen Leuchtbereich für ein Blinklicht, einen Leuchtbereich für ein Schlusslicht, einen Leuchtbereich für ein Bremslicht sowie einen Leuchtbereich für ein Nebelschlusslicht umfasst. Der Leuchtbereich für das Bremslicht umfasst mehrere Leuchtdioden bzw. LED, die in Form mehrerer parallel verlaufender Reihen angeordnet sind. Zwischen benachbarten Reihen aus LED sind Rückstrahlelemente in den Leuchtbereich des Bremslichts integriert. Sämtliche Leuchtbereiche sind voneinander getrennt.

Die DE 199 45 775 B4 offenbart eine Heckleuchte für ein Fahrzeug, bei welcher ein Leuchtbereich für ein Bremslicht einen Leuchtbereich für ein Schlusslicht zumindest teilweise überlappt, bei welcher jedoch ein Leuchtbereich für ein Nebelschlusslicht als getrennter Leuchtbereich ausgeführt ist.

Hiervon ausgehend liegt der vorliegenden Erfindung das Problem zu Grunde eine neuartige Heckleuchte für ein Fahrzeug zu schaffen.

Dieses Problem wird durch eine Heckleuchte gemäß Patentanspruch 1 gelöst.

Die erfindungsgemäße Heckleuchte verfügt über einen Leuchtbereich für ein Rückfahrlicht, einen Leuchtbereich für ein Blinklicht, einen Leuchtbereich für ein Schlusslicht, einen Leuchtbereich für ein Bremslicht und einen Leuchtbereich für ein Nebelschlusslicht, wobei zumindest die vier Leuchtbereiche für das Blinklicht und das Schlusslicht und das Bremslicht und das Nebelschlusslicht von LED gebildet sind, wobei sich die drei Leuchtbereiche für das Schlusslicht und das Bremslicht und das Nebelschlusslicht zumindest derart teilweise überlappen, dass einige LED in mehreren dieser drei Leuchtbereiche angeordnet sind, und wobei die LED dieser drei Leuchtbereiche derart ansteuerbar sind, dass dieselben abhängig von einer Fahrsituation einem der Leuchtbereiche zugeordnet bzw. in einem der Leuchtbereiche aktiv sind.

Nach der hier vorliegenden Erfindung sind zumindest der Leuchtbereich für das Blinklicht und der Leuchtbereich für das Schlusslicht und der Leuchtbereich für das Bremslicht und der Leuchtbereich für das Nebelschlusslicht von LED bzw. Leuchtdioden gebildet, wobei sich die drei Leuchtbereiche für das Schlusslicht und das Bremslicht und das Nebelschlusslicht zumindest teilweise überlappen bzw. überlagern, und zwar derart, dass einige LED in mehreren dieser drei Leuchtbereiche angeordnet sind. Mit Hilfe einer Ansteuerungseinrichtung sind die Leuchtdioden bzw. die LED dieser drei Leuchtbereiche derart ansteuerbar, dass dieselben abhängig von einer Fahrsituation einem dieser drei Leuchtbereiche zugeordnet sind bzw. in einem dieser drei Leuchtbereiche aktiv sind.

Durch die Überlappung der als LED-Leuchtbereiche ausgebildeten Leuchtbereiche für das Schlusslicht, das Bremslicht und das Nebelschlusslicht sowie durch die obige Ansteuerung der LED bzw. Leuchtdioden, die in mehreren Leuchtbereichen angeordnet sind, lassen sich völlig neue Leuchteffekte für eine Heckleuchte realisieren.

Nach einer vorteilhaften Weiterbildung der Erfindung sind die Leuchtbereiche für das Schlusslicht und das Bremslicht bzw. die diesen Leuchtbereichen zugeordneten LED über eine Ansteuereinrichtung frei definierbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein schematisierte Darstellung einer erfindungsgemäßen Heckleuchte;
- Fig. 2: die Heckleuchte der Fig. 1 mit einem schraffierten Bereich zur Verdeutlichung eines Rückfahrlichts;
- Fig. 3: die Heckleuchte der Fig. 1 mit einem schraffierten Bereich zur Verdeutlichung eines Blicklichts;
- Fig. 4: die Heckleuchte der Fig. 1 mit einem schraffierten Bereich zur Verdeutlichung einer Möglichkeit eines Schlusslichts;
- Fig. 5: die Heckleuchte der Fig. 1 mit einem schraffierten Bereich zur Verdeutlichung einer Möglichkeit eines Bremslichts ohne Funktion des Nebelschlusslichtes;
- Fig. 6: die Heckleuchte der Fig. 1 mit einem schraffierten Bereich zur Verdeutlichung eines Nebelschlusslichts;
- Fig. 7: die Heckleuchte der Fig. 1 mit mehreren schraffierten Bereich zur Verdeutlichung eines Schlusslichts, Bremslichts und Nebelschlusslichts; und
- Fig. 8: die Heckleuchte der Fig. 1 mit einem schraffierten Bereich zur Verdeutlichung eines alternativen Bremslichts oder Schlusslichtes.

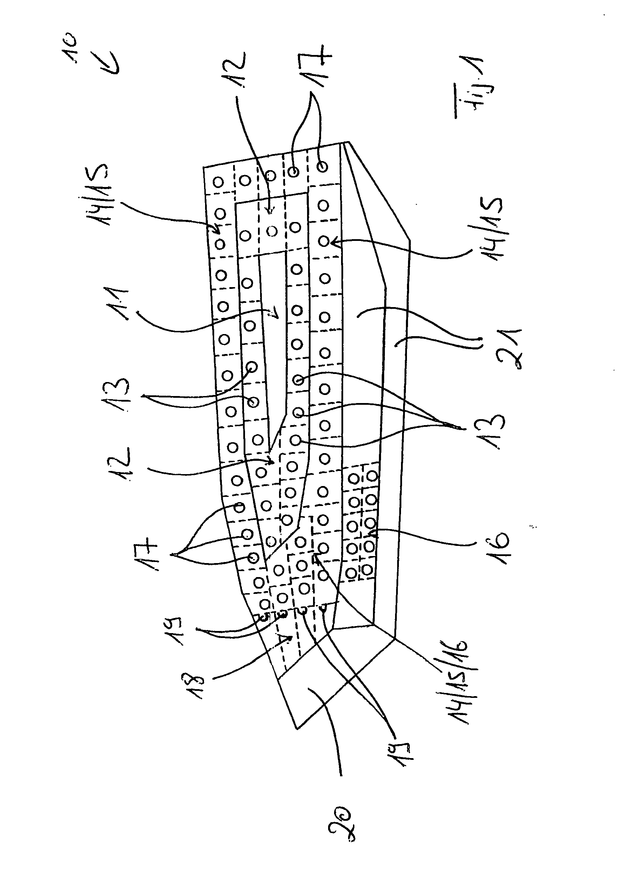

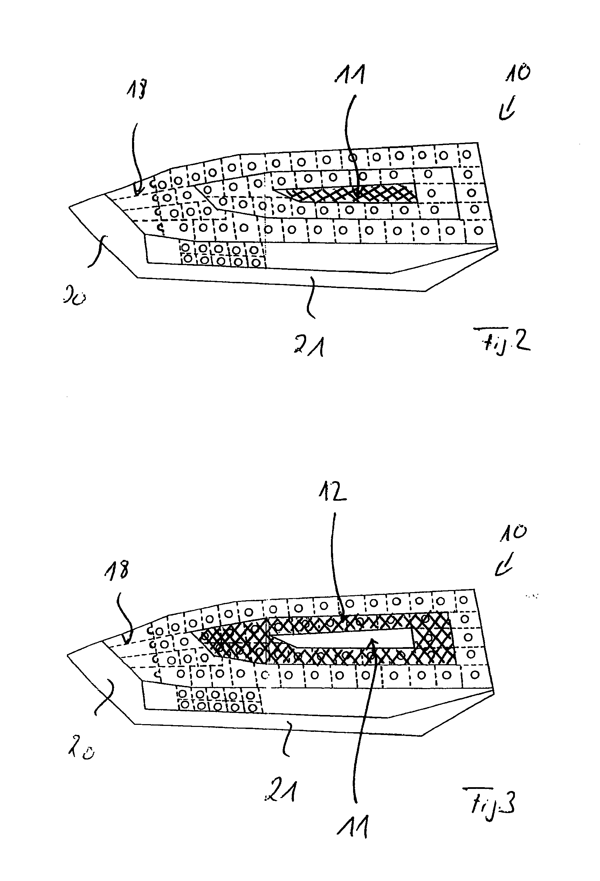

Fig. 1 zeigt eine schematische Darstellung einer erfindungsgemäßen Heckleuchte 10 eines Fahrzeugs. Die Heckleuchte 10 umfasst einen Leuchtbereich 11 für ein Rückfahrlicht, wobei der Leuchtbereich 11 für das Rückfahrlicht mindestens eine Glühlampe umfasst und in Fig. 2 schraffiert dargestellt ist.

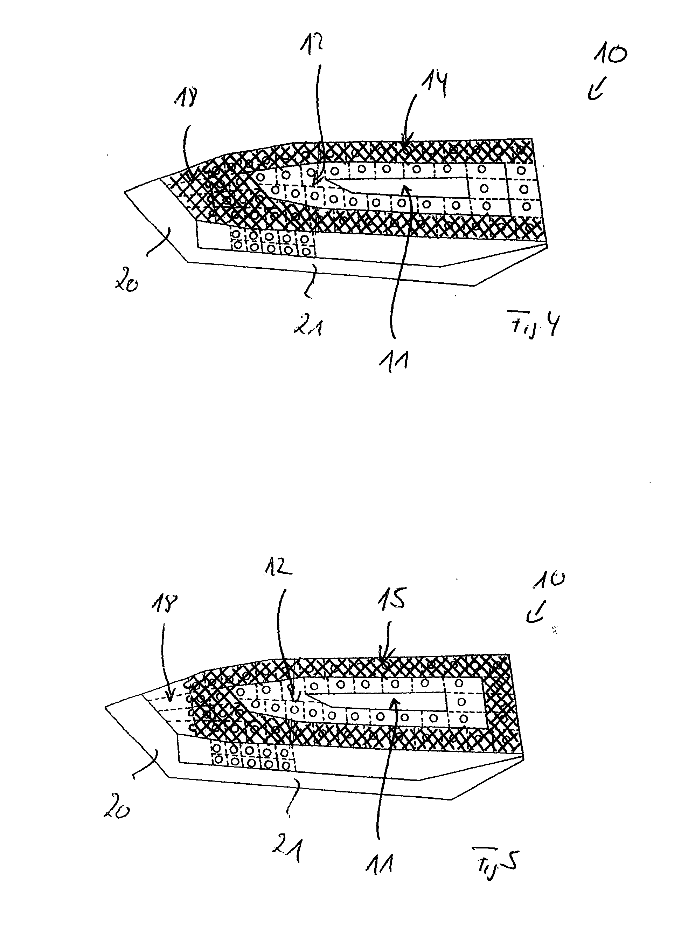

Weiterhin umfasst die Heckleuchte 10 einen Leuchtbereich 12 für ein Blinklicht, wobei der Leuchtbereich 12 für das Blinklicht den Leuchtbereich 11 für das Rückfahrlicht im bevorzugten Ausführungsbeispiel vollständig umschließt und von mehreren Leuchtdioden bzw. LED 13 gebildet ist. Der Leuchtbereich 12 für das Blinklicht ist in Fig. 3 schraffiert dargestellt.

Neben dem Leuchtbereich 11 für das Rückfahrlicht und dem Leuchtbereich 12 für das Blinklicht umfasst die erfindungsgemäße Heckleuchte einen Leuchtbereich 14 für ein Schlusslicht, einen Leuchtbereich 15 für ein Bremslicht sowie einen Leuchtbereich 16 für ein Nebelschlusslicht.

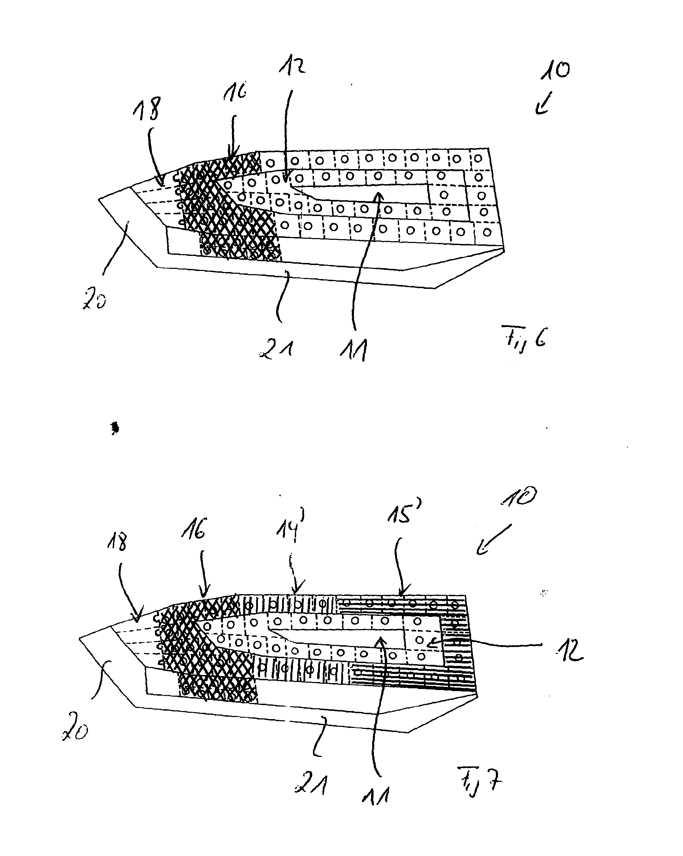

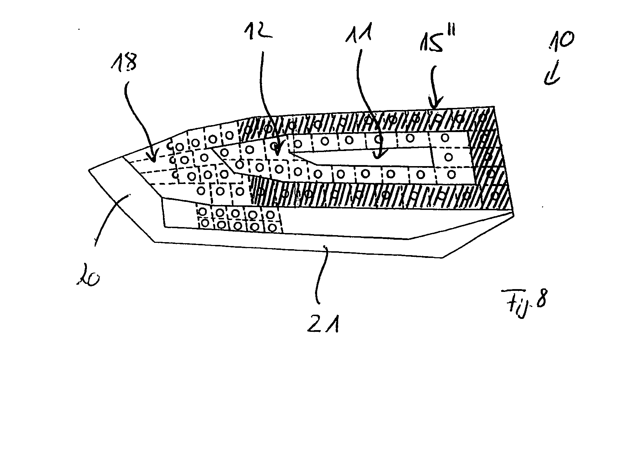

Der Leuchtbereich 14 für das Schlusslicht ist in Fig. 4 schraffiert dargestellt, der Leuchtbereich 15 für das Bremslicht ist in Fig. 5 und der Leuchtbereich 16 für das Nebelschlusslicht in Fig. 6 jeweils schraffiert dargestellt. Diese drei Leuchtbereiche 14, 15 und 16 werden wiederum von Leuchtdioden bzw. LED 17 gebildet. In das Schlusslicht kann auch die weiter unten noch erwähnte Seitenmarkierungsleuchte, die durch einen Leuchtbereich 18 gebildet wird, mit einbezogen werden.

Wie Fig. 5 entnommen werden kann, umschließt der Leuchtbereich 15 für das Bremslicht den Leuchtbereich 12 für das Blinklicht vollständig. Der Leuchtbereich 14 für das Schlusslicht umschließt hingegen den Leuchtbereich 12 für das Blinklicht ausschließlich teilweise, nämlich an drei Seiten. Der Leuchtbereich 16 für das Nebelschlusslicht umschließt den Leuchtbereich 12 für das Blinklicht ebenfalls ausschließlich teilweise, nämlich im Wesentlichen im Bereich einer Seite des Blinklichts.

Wie einem Vergleich der Fig. 4, 5 und 6 entnommen werden kann, überlappen sich die Leuchtbereiche 14, 15 und 16 für das Schlusslicht, das Bremslicht und das Nebelschlusslicht, die jeweils von Leuchtdioden bzw. LED 17 gebildet sind, teilweise, und zwar derart, dass einige LED 17 in mehreren dieser drei Leuchtbereiche 14, 15 und 16 liegen bzw. angeordnet sind. Zumindest die LED 17, die in mehreren dieser drei Leuchtbereiche 14, 15 und 16 liegen, sind mit Hilfe einer Ansteuerungseinrichtung derart ansteuerbar, dass dieselben abhängig von einer Fahrsituation einem der Leuchtbereiche 14, 15 bzw. 16 zugeordnet sind. Dies bedeutet, dass einige der LED 17 abhängig von der Fahrsituation entweder dem Leuchtbereich 14 für das Schlusslicht, dem Leuchtbereich 15 für das Bremslicht oder dem Leuchtbereich 16 für das Nebelschlusslicht zugeordnet sind.

Fig. 7 zeigt die erfindungsgemäße Heckleuchte 10 in einem Zustand, in welchem dieselbe durch Überlagerung der Leuchtbereiche 14, 15 und 16 gleichzeitig ein Nebelschlusslicht, ein Schlusslicht sowie ein Bremslicht realisiert. In Fig. 7 ist der sich hierbei ergebende Leuchtbereich für das Schlusslicht mit der Bezugsziffer 14' und der Leuchtbereich für das Bremslicht mit der Bezugsziffer 15' beziffert.

Bei der gleichzeitigen Realisierung des Nebelschlusslichts, des Schlusslichts sowie des Bremslichts gemäß Fig. 7 sind die Leuchtdioden bzw. LED 17 der entsprechenden Leuchtbereiche 14', 15' und 16 von der Ansteuerungseinrichtung derart ansteuerbar, dass dieselben mit unterschiedlichen Leuchtstärken strahlen. Vorzugsweise strahlt in Fig. 7 der Leuchtbereich 14' für das Schlusslicht gegenüber dem Leuchtbereich 16 für das Nebelschlusslicht und dem Leuchtbereich 15' für das Bremslicht mit einer geringeren Leuchtstärke bzw. Leuchtintensität, umso einen wahrnehmbaren Abstand zwischen dem Leuchtbereich 15' für das Bremslicht und dem Leuchtbereich 16 für das Nebelschlusslicht bereitzustellen.

Neben den bereits erwähnten Leuchtbereichen 11, 12, 14, 15 und 16 umfasst die erfindungsgemäße Heckleuchte 10 weiterhin einen Leuchtbereich 18 für ein Seitenmarkierungslicht, wobei der Leuchtbereich 18 für das Seitenmarkierungslicht ebenfalls Leuchtdioden bzw. LED 19 umfasst. Seitlich des Leuchtbereichs 18 für das Seitenmarkierungslicht schließt sich ein Seitenmarkierungsrückstrahler 20 der Heckleuchte 10 an. Der Seitenmarkierungsrückstrahler 20 geht in einen Rückstrahler 21 über, der sich unterhalb der Leuchtbereiche 14, 15 und 16 erstreckt. Die Seitenmarkierungsleuchte kann prinzipiell auch für das Schlusslicht mit angesteuert werden. Damit ergibt sich eine größere Fläche, welche von nachfolgenden Verkehr deutlicher wahrnehmbar ist.

Eine weitere Besonderheit der erfindungsgemäßen Heckleuchte 10 besteht darin, dass mit Hilfe der Ansteuerungseinrichtung zumindest einige der Leuchtbereiche frei definierbar sind, insbesondere der Leuchtbereich 14 für das Schlusslicht sowie der Leuchtbereich 15 für das Bremslicht. So zeigt Fig. 8 einen alternativen Leuchtbereich 15" für das Bremslicht, der gemäß Fig. 8 den Leuchtbereich 12 für das Blinklicht im Unterschied zum Ausführungsbeispiel der Fig. 5 nicht vollständig sondern lediglich teilweise umschließt.

Durch entsprechende Ansteuerung der Leuchtdioden können nahezu beliebig konturierte Leuchtbereiche für das Bremslicht sowie Schlusslicht bereitgestellt werden, einzige Voraussetzung hierzu ist, dass die vom Gesetzgeber geforderte Leuchtstärke, die Abstände und der Sichtwinkel für diese Leuchtbereiche eingehalten wird: Die Vorgaben der Gesetzgeber in den verschiedenen Ländern sind oft sehr unterschiedlich, was z.B. den Abstand der einzelnen Leuchten bezogen auf die Außenkante de Fahrzeuges bestimmt oder was die Abstände der einzelnen Leuchten für eine deutliche Unterscheidung untereinander betrifft. Mit der erfindungsgemäßen Heckleuchte ist durch eine einfache Ansteuerung jede dieser Forderungen erfüllbar ohne dass länderspezifische Leuchten hergestellt werden müssen.

Der Gestaltung der Leuchtbereiche sind demnach mit der hier vorliegenden Erfindung so gut wie keine Grenzen gesetzt.

## Patentansprüche

1. Heckleuchte für ein Fahrzeug, mit einem Leuchtbereich für ein Rückfahrlicht, mit einem Leuchtbereich für ein Blinklicht, mit einem Leuchtbereich für ein Schlusslicht, mit einem Leuchtbereich für ein Bremslicht und mit einem Leuchtbereich für ein Nebelschlusslicht, **dadurch gekennzeichnet, dass** zumindest die vier Leuchtbereiche (12, 14, 15,16) für das Blinklicht und das Schlusslicht und das Bremslicht und das Nebelschlusslicht von LED gebildet sind, wobei sich die drei Leuchtbereiche (14, 15, 16) für das Schlusslicht und das Bremslicht und das Nebelschlusslicht zumindest derart teilweise überlappen, dass einige LED in mehreren dieser drei Leuchtbereiche (14, 15, 16) angeordnet sind, und wobei die LED dieser drei Leuchtbereiche (14, 15, 16) derart ansteuerbar sind, dass dieselben abhängig von einer Fahrsituation einem der Leuchtbereiche zugeordnet sind.

2. Heckleuchte nach Anspruch 1, **dadurch gekennzeichnet, dass** der Leuchtbereich (11) für das Rückfahrlicht eine Glühlampe umfasst.

3. Heckleuchte nach Anspruch 1 oder 2, **dadurch gekennzeichnet, dass** der Leuchtbereich (12) für das Blicklicht den Leuchtbereich (11) für das Rückfahrlicht zumindest teilweise umschließt und mehrere LED umfasst.

4. Heckleuchte nach einem oder mehreren der Ansprüche 1 bis 3, **dadurch gekennzeichnet, dass** der Leuchtbereich (14) für das Schlusslicht und der Leuchtbereich (15) für das Bremslicht den Leuchtbereich (12) für das Blicklicht jeweils zumindest teilweise umschließen, wobei die beiden Leuchtbereiche (14, 15) für das Schlusslicht und das Bremslicht sich größtenteils überlappen und gemeinsame LED umfassen.

5. Heckleuchte nach einem oder mehreren der Ansprüche 1 bis 4, **dadurch gekennzeichnet, dass** der Leuchtbereich (16) für das Nebelschlusslicht den Leuchtbereich (12) für das Blicklicht zumindest teilweise umschließt, wobei die Leuchtbereiche (14, 15) für das Schlusslicht und das Bremslicht den Leuchtbereich (15) für das Nebelschlusslicht größtenteils überlappen und gemeinsame LED umfassen.

6. Heckleuchte nach einem oder mehreren der Ansprüche 1 bis 5, **gekennzeichnet durch** einen Seitenmarkierungsrückstrahler (20) und einen Rückstrahler (21), wobei der Rückstrahler (21) sich unterhalb des Leuchtbereichs (14, 15, 16) für das Schlusslicht bzw. das Bremslicht bzw. das Nebelschlusslicht und der Seitenmarkierungsrückstrahler (21) sich seitlich neben einem Leuchtbereich (18) für ein Seitenmarkierungslicht anschließt.

7. Heckleuchte nach einem oder mehreren der Ansprüche 1 bis 6, **dadurch gekennzeichnet, dass** zumindest einige Leuchtbereiche über eine Ansteuereinrichtung frei definierbar sind.

8. Heckleuchte nach Anspruch 7, **dadurch gekennzeichnet, dass** der Leuchtbereich (14) für das Schlusslicht und der Leuchtbereich (15) für das Bremslicht über die Ansteuereinrichtung frei definierbar sind.
